# FASCICULE DE BREVET EUROPEEN

(11) **EP 0 437 134 B1**
(45) Date de publication et mention de la délivrance du brevet: **13.10.1993**
(21) Numéro de dépôt: 90403681.1
(22) Date de dépôt: 19.12.1990
(51) Int. Cl.: F16B 37/04

(54) **Ecrou encagé à montage en aveugle sur un panneau ou analogue**
Käfigmutter zur Blindbefestigung auf einer Platte oder ähnlichem
Caged nut for blind-assembly on a board or similar

(30) Priorité: 11.01.1990 FR 9000297
(43) Date de publication de la demande: 17.07.1991
(73) Titulaire: RAPID S.A., F-75852 Paris Cédex 17 (FR)
(72) Inventeur: Dubost, Dominique, F-78170 La Celle Saint-Cloud (FR)
(74) Mandataire: Durand, Yves Armand Louis

(56) Documents cités:
- BE-A- 436 137
- DE-A- 1 500 930
- DE-U- 8 228 762
- FR-A- 2 583 472
- US-A- 3 217 772

## Description

La présente invention a essentiellement pour objet un dispositif de fixation d'un écrou encagé sur un panneau ou analogue.

On connaît déjà des écrous encagés qui peuvent être montés en aveugle par la seule face accessible d'un panneau, d'une tôle ou analogue et qui permettent la fixation par vissage de pièces mécaniques quelconques sur ce panneau ou cette tôle.

C'est ainsi que l'on connaît déjà des écrous encagés comprenant essentiellement une cage qui retient un écrou et qui comporte deux pattes latérales permettant le basculement de la cage dans une première ouverture ménagée dans le panneau ainsi que la retenue de cette cage contre ledit panneau, de telle manière que l'orifice taraudé de l'écrou se situe au droit d'une deuxième ouverture ménagée dans le panneau pour permettre le passage d'un élément fileté tel qu'une vis par exemple.

Malheureusement, de tels écrous encagés, décrits par exemple dans le document DE-A-1 500 930 présentent certaines imperfections.

En effet, ces écrous encagés ne peuvent pas s'adapter à des épaisseurs très variées de panneaux, ne résistent pas très efficacement aux charges axiales élevées qui peuvent être imparties à la vis devant réaliser l'assemblage, et, d'une manière générale, ne sont pas fermement accrochés ou fixés sur le panneau d'une manière solide et satisfaisante après montage sur ledit panneau.

Aussi, la présente invention a pour but de remédier notamment aux inconvénients ci-dessus en proposant un dispositif de fixation d'un écrou encagé pouvant s'adapter à des épaisseurs de panneau très variées et susceptibles de résister efficacement aux fortes charges ou aux forces de poussée axiale élevées.

A cet effet, l'invention a pour objet un dispositif de fixation d'un écrou encagé sur un panneau ou analogue comportant une première et une deuxième ouverture, ce dispositif comprenant un écrou monté dans une cage qui comporte deux pattes latérales insérables dans la première ouverture du panneau pour retenir la cage contre ledit panneau de telle manière que l'orifice taraudé de l'écrou se situe au droit de la deuxième ouverture dans le panneau pour permettre le passage d'un élément fileté, tel que par exemple une vis, caractérisé en ce que l'écrou est maintenu prisonnier entre une première platine et une deuxième platine constituant à elles deux la cage, et en ce que la deuxième platine destinée à s'appliquer contre le panneau comporte au voisinage de l'une de ses extrémités un crochet apte à coopérer avec la deuxième ouverture, tandis que l'extrémité opposée de la deuxième platine comporte au moins une languette qui s'étend entre les deux pattes latérales portées par la première platine et qui est apte à coopérer avec la première ouverture pour empêcher tout déplacement relatif de la cage par rapport au panneau après accrochage de cette cage sur le bord de la deuxième ouverture du panneau au moyen du crochet.

Selon encore une autre caractéristique de ce dispositif encagé, la deuxième platine comporte des pattes permettant sa fixation sur la première platine.

Suivant une variante, la deuxième platine de cet écrou encagé est mobile en translation par rapport à la première platine.

On précisera encore ici que le crochet précité, situé sur le bord d'un orifice ménagé dans la deuxième platine, fait saillie du plan de cette deuxième platine, de même que la languette précitée fait saillie du plan de ladite deuxième platine.

Suivant un mode de réalisation, la languette précitée comporte une extrémité repliée vers la première platine et susceptible de venir en butée contre le bord de la première ouverture du panneau.

Dans le cas où la deuxième platine est mobile en translation par rapport à la première platine, la languette de ladite deuxième platine comporte un bord d'extrémité coopérant avec une extrémité repliée de ladite première platine susceptible de venir en butée contre le bord de la première ouverture du panneau, pour ainsi verrouiller la deuxième platine sur la première platine en position d'accrochage de l'écrou encagé sur ledit panneau.

On précisera que, dans ce cas, la première et la deuxième platine comportent respectivement un orifice permettant le passage d'un outil pour effectuer le verrouillage précité.

Suivant une autre caractéristique de l'invention, la première platine comportant les pattes latérales précitées présente, en section transversale, sensiblement la forme d'un U dont la base et la racine des branches est découpée pour retenir l'embase polygonale, par exemple carrée, de l'écrou.

Cette embase se prolonge par un fût intérieurement fileté de forme extérieure carrée et dont la face supérieure affleure avec le brod supérieur des deux branches du U précité, lesquelles branches présentent une forme trapézoïdale.

Suivant un autre mode de réalisation, la première platine comportant les pattes latérales précitées comporte une partie emboutie dans laquelle s'encastre l'embase polygonale, par exemple carrée, de l'écrou.

Mais d'autres caractéristiques et avantages de l'invention apparaîtront mieux dans la description détaillée qui suit et se réfère aux dessins annexés, donnés uniquement à titre d'exemple, et dans lesquels :
la figure 1 est une vue en perspective d'un écrou encagé conforme à cette invention ;
la figure 2 est une vue partielle et en perspective d'un panneau sur lequel est monté l'écrou encagé de la figure 1 ;
la figure 3 est une vue en coupe de l'écrou encagé monté sur ce panneau, suivant la ligne III-III de la figure 2;
la figure 4 est une vue en perspective d'un autre mode de réalisation d'écrou encagé conforme à cette invention ;
la figure 5 est une vue en perspective partielle d'un panneau sur lequel est monté l'écrou de la figure 4 ;
la figure 6 est une vue en coupe de l'écrou monté sur ce panneau, suivant la ligne VI-VI de la figure 5 ;
la figure 7 est une vue en perspective d'encore un autre mode de réalisation d'écrou encagé conforme à cette invention et comportant notamment deux platines mobiles en translation l'une par rapport à l'autre et représentées dans la position avant montage de l'écrou encagé sur le panneau ;
la figure 8 est une vue en perspective partielle d'un panneau sur lequel est verrouillé l'écrou encagé de la figure 7; et
les figures 9 et 10 sont des vues en coupe suivant la ligne IX-IX de la figure 8, et illustrant respectivement l'écrou encagé en position montée sur le panneau avant verrouillage et après verrouillage.

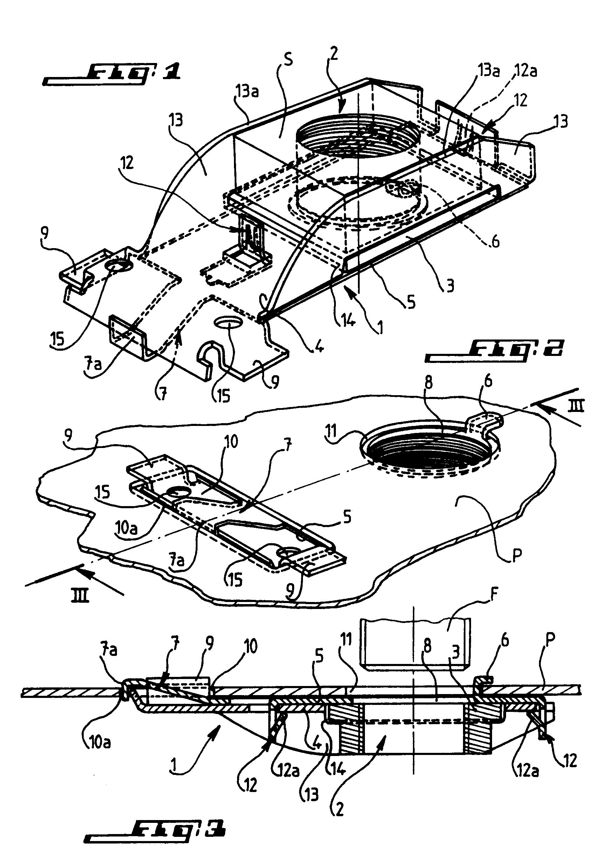

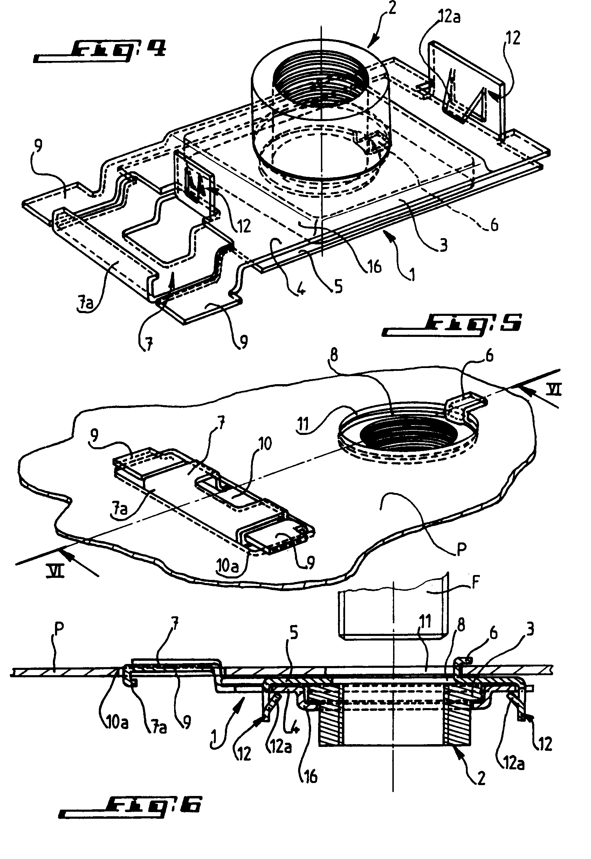

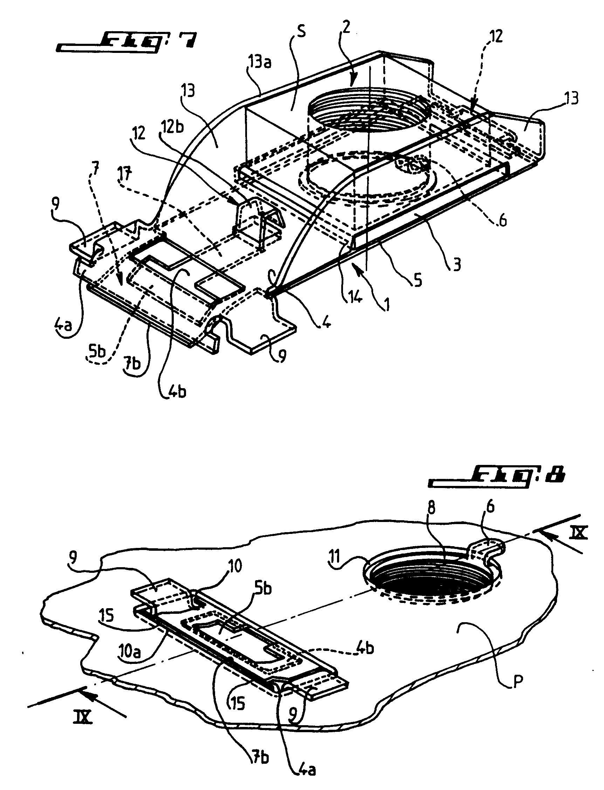

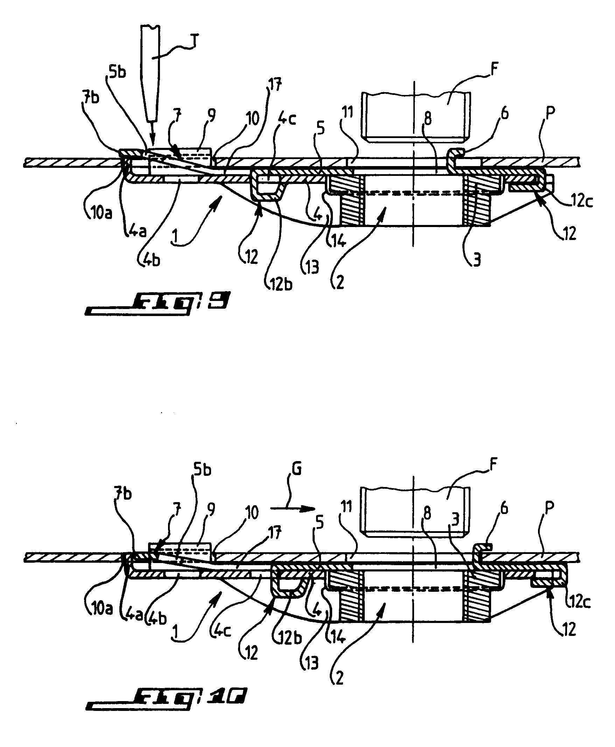

En se reportant notamment aux figures 1 et 4, on voit un écrou encagé qui se compose essentiellement de deux éléments, à savoir une cage 1 et un écrou proprement dit 2 comportant une embase 3 qui, suivant l'exemple représenté, est sensiblement carrée.

Plus précisément, l'embase 3 porte une partie supérieure intérieurement filetée qui, suivant l'exemple de réalisation représenté sur les figures 1 à 3 est sensiblement carrée, et qui, suivant la variante représentée sur les figures 4 à 6, présente la forme d'un fût.

Dans les deux cas, l'écrou 2 est maintenu prisonnier par son embase 3 entre une première platine 4 et une deuxième platine 5 constituant à elles deux la cage 1.

Selon une caractéristique essentielle de cette invention, la deuxième platine 5 destinée à s'appliquer contre l'une des faces d'un panneau P comporte, au voisinage de l'une de ses extrémités, un petit crochet 6, tandis que son autre extrémité opposée comporte une languette 7, laquelle, tout comme le crochet 6, fait saillie du plan de la deuxième platine 5, comme on le voit bien sur les figures 2, 3, 5 et 6.

Plus précisément, le crochet 6 est réalisé sur le bord d'un orifice 8 pratiqué dans la deuxième platine 5, tandis que la languette 7 faisant, tout comme le crochet 6, saillie du plan de la deuxième platine 5, comporte une extrémité 7a repliée en direction de la première platine 4.

Cette première platine 4 comporte, à l'une de ses extrémités deux pattes latérales 9 permettant le basculement de l'écrou encagé dans une première ouverture 10 (figures 2 et 5) ménagée dans le panneau P, ainsi que la retenue, avec le crochet 6, de l'écrou encagé contre le panneau P, comme on le décrira plus loin à propos du montage et du fonctionnement de l'écrou encagé selon cette invention.

On observera cependant déjà que l'orifice 8 pratiqué dans la deuxième platine 2 pourra se situer au droit d'une deuxième ouverture 11 ménagée dans le panneau P et sur le bord de laquelle pourra s'accrocher le crochet 6, tandis que la languette 7 pourra, par son extrémité repliée 7a, venir en butée contre le bord 10a de la première ouverture 10 du panneau P.

La deuxième platine 5 comporte des pattes 12, par exemple deux pattes dont l'une est découpée dans ladite platine 5 suivant les réalisations représentées, lesquelles pattes sont elles-mêmes découpées pour former une petite languette 12a permettant l'accrochage par clippage de cette deuxième platine 5 sur la première platine 4.

Suivant la réalisation visible sur les figures 1 à 3, la première platine 4 comportant les pattes latérales 9 entre lesquelles passe la languette 7 appartenant à la deuxième platine 5, constitue l'embase d'une pièce présentant la forme générale d'un U dont les deux branches 13 présentent une forme sensiblement trapézoïdale. La partie supérieure carrée de l'écrou 2 est maintenue prisonnière entre les deux branches 13, comme on le voit bien sur la figure 1, et la surface supérieure S de cette partie supérieure carrée affleure avec le bord supérieur 13a de chacune des branches 13. Ainsi, grâce à cette disposition et à la forme trapézoïdale des branches 13, on pourra faire passer et basculer dans la première ouverture 10 du panneau P un écrou de dimensions maximales, de sorte que la surface d'appui ou de portée de cet écrou contre le panneau P sera elle aussi maximale.

On observera encore que, dans la réalisation d'écrou encagé des figures 1 à 3, la racine des branches trapézoïdales 13 ainsi que l'embase ou platine 4 est découpée, comme on le voit en 14 pour permettre la retenue de l'embase carrée 3 de l'écrou 2, et cela de façon flottante de préférence.

On a montré en 15 sur les figures 1 et 2 des petits trous permettant le passage d'un outil pour effectuer le montage de l'écrou encagé sur le panneau P.

Suivant la réalisation illustrée par les figures 4 à 6, la première platine 4 comportant les pattes latérales 9 entre lesquelles s'étend la languette 7 appartenant à la deuxième platine 5, possède une partie centrale emboutie repérée en 16 et dans laquelle s'encastre l'embase carrée 3 de l'écrou 2, étant entendu que cette embase 3 est maintenue prisonnière entre la première platine 4 et la deuxième platine 5 clippée sur ladite première platine au moyen des pattes 12 dont l'une est ici découpée dans la languette 7, comme on le voit bien sur la figure 4.

Cette languette 7 présente une forme quelque peu différente de la languette représentée sur les figures 1 à 3, en ce sens qu'elle présente en section transversale sensiblement une forme d'un U dont la base se situe en dehors du plan de la deuxième platine 5, de même que les pattes latérales 9 se situent aussi en dehors du plan de la première platine 4 à laquelle elles appartiennent.

Mais, pour une meilleure compréhension de l'invention, on expliquera brièvement ci-après comment s'effectue le montage de l'écrou encagé de la figure 1 sur le panneau P étant entendu que le montage de l'écran encagé illustré par la figure 4 s'effectue exactement de la même façon.

On fait pénétrer l'écrou encagé dans la première ouverture 10 du panneau P, par son extrémité opposée aux pattes latérales 9.

Puis on fait effectuer à cet écrou encagé un mouvement de pivotement et de translation, de façon à réaliser son accrochage par le crochet 6 sur le bord de la deuxième ouverture 11 du panneau P, comme on le voit bien sur la figure 2.

Lorsque l'écrou encagé sera poussé parallèlement au panneau P de façon que le crochet 6 vienne en butée contre le bord de l'ouverture 11, l'extrémité repliée 7a de la languette 7 pénètrera élastiquement dans la première ouverture 10 du panneau P de façon à venir en butée contre le bord 10a de l'ouverture 10, comme on le voit bien sur la figure 2, et également sur la figure 3.

Dès lors, dans cette position, l'écrou encagé sera immobilisé contre l'une des faces du panneau P, et ne pourra pas reculer ou se déplacer par rapport à ce panneau, puisqu'il sera verrouillé dans les ouvertures 10 et 11 grâce au crochet 6 et à la languette élastique 7.

Il suffira ensuite d'utiliser un élément fileté F, tel que par exemple une vis, pour fixer une pièce quelconque (non représentée) sur le panneau P par l'intermédiaire de l'écrou encagé selon cette invention.

Dans la variante illustrée par les figures 7 à 10, et qui s'apparente quelque peu à la réalisation représentée sur les figures 1 à 3, on a utilisé les mêmes repères pour désigner les éléments communs.

Comme décrit précédemment, les deux platines 4 et 5 constituent à elles deux une cage 1 pour l'écrou 2, mais ici, la deuxième platine 5 est mobile en translation par rapport à la première platine 4 pour permettre le verrouillage de l'écrou encagé sur le panneau P, comme on l'expliquera plus loin.

La languette 7 faisant saillie du plan de la deuxième platine 5 comporte un bord d'extrémité 7b non replié pouvant coopérer avec une extrémité repliée 4a de la première platine 4, cette extrémité repliée 4a pouvant venir en butée, lorsque l'écrou encagé est en position montée sur le panneau P, contre le bord 10a de la première ouverture 10 dudit panneau P.

Comme on le voit mieux sur les figures 9 et 10, au niveau de son extrémité comportant l'extrémité repliée 4a, la première platine 4 comporte un orifice rectangulaire 4b, de même que la languette 7 appartenant à la deuxième platine 5 comporte elle aussi un orifice 5b, ces deux orifices 4b et 5b pouvant recevoir un outil tel qu'un tournevis montré schématiquement en T sur la figure 9, de façon à réaliser le verrouillage de la deuxième platine 5 sur la première platine 4, comme on l'expliquera en détail ci-après.

Avant montage, le bord d'extrémité 7b de la languette 7 repose sur l'extrémité repliée 4a de la première platine 4, comme on le voit bien sur les figures 7 et 9.

Comme expliqué précédemment, on fait alors pénétrer l'écrou encagé dans la première ouverture 10 du panneau P, par son extrémité opposée aux pattes latérales 9, puis on fait effectuer à cet écrou encagé un mouvement de pivotement, de façon que la deuxième platine 5 soit appliquée contre la face non accessible du panneau P, comme on le voit bien sur la figure 9. On remarquera ici, que le crochet 6 de la platine 5 n'est pas engagé sur le bord de l'ouverture 11 du panneau P.

A ce stade, on introduit l'extrémité du tournevis T dans les orifices 5b, 4b, et par un léger mouvement de pivotement de ce tournevis, on provoque la translation de la platine 5 par rapport à la platine 4 suivant la flèche G, ce qui réalise l'engagement du crochet 6 sur le bord de l'ouverture 11 du panneau P, et l'escamotage du bord 7b de la languette 7 qui vient ainsi buter contre l'extrémité repliée 4a de la platine 4, comme on le voit bien sur les figures 8 et 10.

On a ainsi verrouillé la deuxième platine 5 sur la première platine 4, et cela en position d'accrochage de l'écrou encagé sur le panneau P. En d'autres termes, aucun mouvement de recul de la platine 5 par rapport à la platine 4 ne sera possible, ce qui signifie que l'écrou encagé sera verrouillé en position d'accrochage sur le panneau P.

On observera encore ici que, dans la variante des figures 7 à 10 qui vient d'être décrite, les pattes 12 appartenant à la platine 5 se composent d'une patte 12b repliée, découpée dans ladite platine 5 et traversant une ouverture 4c dans la platine 4, et d'une autre patte 12c elle aussi repliée et enserrant l'extrémité de la platine 4 opposée à celle comportant l'extrémité repliée 4a. Naturellement, les pattes 12b et 12c retiennent de façon coulissante la platine 5 sur la platine 4. On voit en 17 sur les figures 7, 9 et 10 une ouverture allongée dans la platine 5, communiquant avec l'orifice 5b et résultant du découpage et du repliement de la patte 12b.

Bien entendu, l'invention n'est nullement limitée aux modes de réalisation décrits et illustrés qui n'ont été donnés qu'à titre d'exemple.

## Revendications

1. Dispositif de fixation d'un écrou encagé sur un panneau ou analogue (P) comportant une première (10) et une deuxième ouverture (11), ce dispositif comprenant un écrou (2) monté dans une cage (1) qui comporte deux pattes latérales (9) insérables dans la première ouverture (10) du panneau pour retenir la cage (1) contre ledit panneau de telle manière que l'orifice taraudé de l'écrou (2) se situe au droit de la deuxième ouverture (11) dans le panneau (P) pour permettre le passage d'un élément fileté (F), tel que par exemple une vis, caractérisé en ce que l'écrou (2) est maintenu prisonnier entre une première platine (4) et une deuxième platine (5) constituant à elles deux la cage (1), et en ce que la deuxième platine (4) destinée à s'appliquer contre le panneau (P) comporte au voisinage de l'une de ses extrémités un crochet (6) apte à coopérer avec la deuxième ouverture (11), tandis que l'extrémité opposée de la deuxième platine (4) comporte au moins une languette (7) qui s'étend entre les deux pattes latérales (9) portées par la première platine (4) et qui est apte à coopérer avec la première ouverture (10) pour empêcher tout déplacement relatif de la cage (1) par rapport au panneau (P) après accrochage de cette cage sur le bord de la deuxième ouverture (11) du panneau (P) au moyen du crochet (6).

2. Dispositif selon la revendication 1, caractérisé en ce que la deuxième platine (5) comporte des pattes (12) permettant sa fixation sur la première platine (4).

3. Dispositif selon la revendication 1 ou 2, caractérisé en ce que la deuxième platine (5) est mobile en translation par rapport à la première platine (4).

4. Dispositif selon l'une des revendications 1 à 3, caractérisé en ce que le crochet précité (6), situé sur le bord d'un orifice (8) ménagé dans la deuxième platine (5), fait saillie du plan de cette deuxième platine, de même que la languette précitée (7) fait saillie du plan de ladite deuxième platine (5).

5. Dispositif selon la revendication 1, 2, ou 4, caractérisé en ce que la languette précitée (7) comporte une extrémité (7a) repliée vers la première platine (4) et susceptible de venir en butée contre le bord (10a) de la première ouverture (10) du panneau (P).

6. Dispositif selon l'une des revendications 1 à 4, caractérisé en ce que dans le cas où la deuxième platine (5) est mobile en translation par rapport à la première platine (4), la languette (7) de ladite deuxième platine comporte un bord d'extrémité (7b) coopérant avec une extrémité repliée (4a) de ladite première platine susceptible de venir en butée contre le bord (10a) de la première ouverture (10) du panneau (P), pour ainsi verrouiller la deuxième platine sur la première platine en position d'accrochage de l'écrou encagé sur ledit panneau.

7. Dispositif selon la revendication 6, caractérisé en ce que la première et la deuxième platines (4, 5) comportent respectivement un orifice (4b, 5b) permettant le passage d'un outil (T) pour effectuer le verrouillage précité.

8. Dispositif selon l'une des revendications 1 à 7, caractérisé en ce que la première platine (4) comportant les pattes latérales précitées (9) présente en section transversale sensiblement la forme d'un U dont la base et la racine des branches (13) est découpée (14) pour retenir l'embase polygonale (3), par exemple carrée, de l'écrou (2).

9. Dispositif selon la revendication 8, caractérisé en ce que l'embase (3) de l'écrou (2) se prolonge par un fût intérieurement fileté de forme extérieure carrée et dont la face supérieure (S) affleure avec le bord supérieur (13a) des deux branches (13) du U précité, lesquelles branches (13) présentent une forme trapézoidale.

10. Dispositif selon l'une des revendications 1, 2, 4 ou 5, caractérisé en ce que la première platine (4) comportant les pattes latérales précitées (9) comporte une partie emboutie (16) dans laquelle s'encastre l'embase polygonale (3), par exemple carrée, de l'écrou (2).

## Patentansprüche

1. Vorrichtung zur Befestigung einer Käfigmutter an einer eine erste (10) und eine zweite Oeffnung (11), aufweisenden Tafel oder dergleichen (P), wobei diese Vorrichtung eine in einem Käfig (1) angeordnete Mutter (2) aufweist, welcher zwei in die erste Oeffnung (10) der Tafel einsetzbare Seitenleisten (9) aufweist, um den Käfig (1) an der besagten Tafel derart zurückzuhalten, dass das Gewindeloch der Mutter (2) mit der zweiten Oeffnung (11) in der Tafel (P) fluchtend gelegen ist, um die Durchführung eines Gewindeelementes (F), wie zum Beispiel einer Schraube, zu gestatten, dadurch gekennzeichnet, dass die Mutter (2) zwischen einer ersten Platte (4) und einer zweiten Platte (5), die beide zusammen den Käfig (1) bilden, gefangen gehalten wird und dass die zweite zur Anlage an der Tafel (P) bestimmte Platte (4) im Bereich einer ihrer Enden einen zur Zusammenwirkung mit der zweiten Oeffnung (11) geeigneten Haken (6) aufweist, während das entgegengesetzte Ende der zweiten Platte (4) wenigstens eine Zunge (7) aufweist, die sich zwischen den beiden durch die erste Platte (4) getragenen Seitenleisten (9) erstreckt und die geeignet ist, mit der ersten Oeffnung (10) zusammenzuwirken, um jede relative Verschiebung des Käfigs (1) in Bezug auf der Tafel (P) nach dem Anhaken dieses Käfigs an dem Rand der zweiten Oeffnung (11) der Tafel (P) mittels des Hakens (6) zu verhindern.

2. Vorrichtung nach Anspruch 1, dadurch gekennzeichnet, dass die zweite Platte (5) ihre Befestigung an der ersten Platten (4) gestattende Lappen (12) aufweist.

3. Vorrichtung nach Anspruch 1 oder 2, dadurch gekennzeichnet, dass die zweite Platte (5) in Bezug auf der ersten Platte (4) parallel verschiebbar beweglich ist.

4. Vorrichtung nach einem der Ansprüche 1 bis 3, dadurch gekennzeichnet, dass der an dem Rand eines in der zweiten Platte (5) gebildeten Loches (8) gelegene vorgenannte Haken (6) aus der Ebene dieser zweiten Platte vorspringt und die vorgenannte Zunge (7) ebenfalls aus der Ebene der besagten zweiten Platte (5) vorspringt.

5. Vorrichtung nach Anspruch 1, 2 oder 4, dadurch gekennzeichnet, dass die vorgenannte Zunge (7) ein zu der ersten Platte (4) hin zurückgebogenes Ende (7a) aufweist, welches zum Anschlag an den Rand (10a) der ersten Oeffnung (10) der Tafel (P) kommen kann.

6. Vorrichtung nach einem der Ansprüche 1 bis 4, dadurch gekennzeichnet, dass, im Fall, wo die zweite Platte (5) in Bezug auf der ersten Platte (4) parallel verschiebbar beweglich ist, die Zunge (7) der besagten zweiten Platte eine mit einem zurückgefalteten Ende (4a) der besagten ersten Platte zusammenwirkende Endkante (7b) aufweist, die zum Anschlag an den Rand (10a) der ersten Oeffnung (10) der Tafel (P) kommen kann, um somit die zweite Platte an der ersten Platte in der Stellung des Anhakens der Käfigmutter an der besagten Tafel zu verriegeln.

7. Vorrichtung nach Anspruch 6, dadurch gekennzeichnet, dass die erste und die zweite Platte (4, 5) jeweils eine die Durchführung eines Werkzeugs (T) zur Bewerkstelligung der vorgenannten Verriegelung gestattende Oeffnung (4b, 5b) aufweisen.

8. Vorrichtung nach einem der Ansprüche 1 bis 7, dadurch gekennzeichnet, dass die erste die vorgenannten Seitenleisten (9) aufweisende Platte (4) im Querschnitt etwa die Gestalt eines U's aufweist, dessen Basis und dessen Wurzel der Schenkel (13) ausgeschnitten (14) sind, um den vieleckigen, zum Beispiel quadratischen Grundteil (3) der Mutter (2) zurückzuhalten.

9. Vorrichtung nach Anspruch 8, dadurch gekennzeichnet, dass der Grundteil (3) der Mutter (2) sich mit einem mit Innengewinde versehenen Schaft quadratischer Aussengestalt verlängert und dessen obere Fläche (S) mit der oberen Kante (13a) der beiden Schenkel (13) des vorgenannten U's glatt bündig abschliesst, welche Schenkel (13) eine trapezförmige Gestalt aufweisen.

10. Vorrichtung nach einem der Ansprüche 1, 2, 4 oder 5, dadurch gekennzeichnet, dass die vorgenannten Seitenleisten (9) aufweisende erste Platte (4) einen getieften Teil (16) aufweist, in welchen der vieleckige zum Beispiel quadratische Grundteil (3) der Mutter (2) eingelassen ist.

## Claims

1. Device for the fastening of a caged nut onto a panel or the like (P) comprising a first (10) and a second opening (11), this device comprising a nut (2) mounted within a cage (1) which comprises two side lugs (9) insertable into the first opening (10) of the panel for retaining the cage (1) onto the said panel in such a manner that the tapped opening of the nut (2) is located plumb with the second opening (11) in the panel (P) to permit the passage of a threaded element (F) such for example as a screw, characterized in that the nut (2) is held entrapped between a first plate (4) and a second plate (5) both constituting the cage (1) and in that the second plate (4) intended to be applied upon the panel (P) comprises in the vicinity of one of its ends a hook (6) adapted to co-operate with the second opening (11) whereas the opposite end of the second plate (4) comprises at least one tongue (7) which extends between both side lugs (9) carried by the first plate (4) and which is adapted to co-operate with the first opening (10) to prevent any relative displacement of the cage (1) with respect to the panel (P) after the hooking of this cage upon the edge of the second opening (11) of the panel (P) by means of the hook (6).

2. Device according to claim 1, characterized in that the second plate (5) comprises lugs (12) permitting its fastening onto the first plate (4).

3. Device according to claim 1 or 2, characterized in that the second plate (5) is movable in translatory relationship with respect to the first plate (4).

4. Device according to one of claims 1 to 3, characterized in that the aforesaid hook (6) located on the edge of an aperture (8) formed in the second plate (5) projects from the plane of this second plate and likewise the aforesaid tongue (7) projects from the plane of the said second plate (5).

5. Device according to claim 1, 2 or 4, characterized in that the aforesaid tongue (7) comprises an end (7a) folded back towards the first plate (4) and likely to come in abutment onto the edge (10a) of the first opening (10) of the panel (P).

6. Device according to one of claims 1 to 4, characterized in that in the case where the second plate (5) is movable in translatory relationship with respect to the first plate (4), the tongue (7) of the said second plate comprises an end edge (7b) co-operating with a folded-back end (4a) of the said first plate likely to come in abutment onto the edge (10a) of the first opening (10) of the panel (P) to thus lock the second plate onto the first plate in the position of hooking the caged nut onto the said panel.

7. Device according to claim 6, characterized in that the first and the second plates (4, 5) respectively comprise an aperture (4b, 5b) permitting the passage of a tool (T) for effecting the aforesaid locking.

8. Device according to one of claims 1 to 7, characterized in that the first plate (4) comprising the aforesaid side lugs (9) exhibits in cross-section substantially the shape of a U the base and the root of the legs (13) of which are cut out (14) to retain the polygonal for example square base portion (3) of the nut (2).

9. Device according to claim 8, characterized in that the base portion (3) of the nut (2) is extended by an internally threaded shank of square external shape and the top face (S) of which is in flush registering relation to the upper edge (13a) of both legs (13) of the aforesaid U, which legs (13) exhibit a trapezoidal shape.

10. Device according to one of claims 1, 2, 4 or 5, characterized in that the first plate (4) comprising the aforesaid side lugs (9) comprises a pressed hollow portion (16) into which the for example square polygonal base portion (3) of the nut (2) fits.
